Europäisches Patentamt

European Patent Office

Office européen des brevets

(11) Veröffentlichungsnummer: **0 150 785
B1**

(12) **EUROPÄISCHE PATENTSCHRIFT**

(45) Veröffentlichungstag der Patentschrift:
**12.04.89**

(21) Anmeldenummer: **85100551.2**

(22) Anmeldetag: **19.01.85**

(51) Int. Cl.⁴: **A 46 D  3/04,** A 46 D  3/00,
A 46 B  3/06, A 46 D  3/06

(54) **Verfahren zum Verbinden von Borsten mit einem Borstenträger.**

(30) Priorität: **01.02.84  DE 3403341**

(43) Veröffentlichungstag der Anmeldung:
**07.08.85 Patentblatt 85/32**

(45) Bekanntmachung des Hinweises auf die Patenterteilung:
**12.04.89 Patentblatt 89/15**

(84) Benannte Vertragsstaaten:
**AT BE CH DE FR GB IT LI NL SE**

(56) Entgegenhaltungen:
**EP-A- 0 149 996
DE-A- 2 335 468
DE-A- 2 847 781
DE-A- 2 849 278
DE-A- 2 849 510
GB-A- 2 016 917
US-A- 3 910 637**

(73) Patentinhaber: **CORONET-WERKE Heinrich Schlerf
GmbH, D-6948 Wald-Michelbach/Odw. (DE)**

(72) Erfinder: **Weihrauch, Georg, Am Rossert,
D-6948 Waldmichelbach 2 Affolterbach (DE)**

(74) Vertreter: **Dr.-Ing. Hans Lichti Dipl.-Ing. Heiner Lichti
Dipl.-Phys. Dr. Jost Lempert,
Postfach 41 07 60 Durlacher Strasse 31,
D-7500 Karlsruhe 41 (DE)**

## Beschreibung

Die Erfindung betrifft ein Verfahren zum Verbinden von Borsten mit einem Borstenträger, die jeweils aus thermoplastischem Kunststoff bestehen, indem die Borsten an ihrem einen Ende und der Borstenträger an seiner Borsten-Aufnahmeseite aufgeschmolzen, anschließend Borsten und Borstenträger zusammengeführt und in dieser Lage gegebenenfalls bis zum Erstarren der Schmelze gehalten werden. Unter Borsten werden hier Einzelborsten und jede Mehrfachanordnung von Borsten, z.B. Borstenbündel, Borstenköpfe für Pinsel, Borstenstreifen etc. verstanden.

In der Bürsten- und Pinsel-Industrie wird seit mehr als zehn Jahren an dem Problem gearbeitet, die herkömmliche Technik der Verbindung von Borsten und Borstenträger, bei der die Borsten eingezogen, eingeklebt, eingestanzt oder eingepreßt werden, durch rationellere Verfahren zu ersetzen. So ist es bekannt (DE-PS 845 933, DE-AS 1 050 304), das eine Ende der gebündelten Borsten aufzuschmelzen und zu einer kopf- oder plattenförmigen Verdickung zu verformen, die gebündelten Borsten mit der Verdickung in eine Gießform für den Borstenträger einzuführen und anschließend schmelzflüssigen Kunststoff in die Gießform einzugeben, so daß nach Erhärten des Kunststoffs die einzelnen Borstenbündel im Borstenträger verankert sind. Diese Technik konnte sich wegen fertigungstechnischer Schwierigkeiten aber auch unzulänglicher Gebrauchseigenschaften des Fertigproduktes in der Praxis nicht durchsetzen.

Es hat deshalb nicht an Versuchen gefehlt, die aus einem Thermoplast bestehenden Borsten unmittelbar mit dem Borstenträger, der gleichfalls aus einem Thermoplast hergestellt ist, durch Schweißen zu verbinden (DE-OS 2 335 468, 2 849 510, 2 937 241). Hierbei stellt sich das auch in der sonstigen Kunststofftechnik bekannte Problem, daß eine dauerhafte Schweißverbindung mit ausreichender Festigkeit nur dann erreicht werden kann, wenn die beiden Fügepartner – Borsten und Borstenträger – aus dem gleichen Kunststoff bestehen. Die Verbindung ungleicher Werkstoffe, z.B. von Polyamid, das häufig für Borsten, z.B. bei Zahnbürsten, verwendet wird, mit anderen Thermoplasten, z.B. Polypropylen und Polystyrol, ist bisher zufriedenstellend nicht gelungen. Die Verwendung gleicher Werkstoffe führt aber in der Regel zu einer Verteuerung des Produktes, da für die Borsten ein relativ hochwertiger Kunststoff verwendet werden muß, an den besondere Anforderungen hinsichtlich Biegefähigkeit, Rückstellvermögen, Verschleißfestigkeit, Dauerelastizität etc. gestellt werden und somit für den Borstenträger mit seinem in der Regel wesentlich größeren Bedarf an Kunststoffmasse ein gleich hochwertiger Kunststoff verwendet werden müßte.

Soweit bisher das Verschweißen von Borsten und Borstenträger in Erwägung gezogen worden ist, hat man die Borstenbündel an ihren Enden aufgeschmolzen und stumpf auf den gegebenenfalls partiell aufgeschmolzenen Borstenträger aus gleichem Thermoplast aufgeschweißt. Dabei wird das aufgeschmolzene Ende unter leichtem Druck an den Borstenträger herangeführt, so daß sich die Schmelze auf der Aufnahmeseite des Borstenträgers tellerartig ausbreitet. Dabei ist auch schon vorgeschlagen worden, ungleiche Fügepartner, nämlich Polyurethan für den Borstenträger und Polyamid für die Borsten miteinander zu verbinden (DE-OS 2 937 241), wobei beide Fügepartner in der Verbindungsebene verschmolzen werden. Auch hierbei handelt es sich um ein Stumpfschweißen, da extrem dünne Borstenträger von ca. 1 mm eingesetzt werden, die sich nachträglich durch Erwärmen zu räumlichen Gebilden verformen lassen sollen. Es ist in diesem Zusammenhang ferner bekannt, den Borstenträger zuvor mit Löchern zu versehen und in diese die aufgeschmolzenen Enden der Borstenbündel einzuführen derart, daß eine Stumpfschweißung am Boden des Lochs stattfindet (DE-OS 2 335 468) oder aber die Schmelze der Borsten das Loch im Borstenträger annähernd vollständig ausfüllt (DE-OS 2 937 241). Hiermit sollen der Halt des Borstenbündels verbessert werden, indem beispielsweise die Löcher mit Hinterschneidungen versehen sind, und vermutlich auch die tellerförmige Ausbreitung der Schmelze auf der ebenen Aufnahmeseite des Borstenträgers vermieden werden. Praktische Bedeutung hat dieses Verfahren, das sich als eine Art Ausgießen der Löcher darstellt, nicht erlangt.

In der Praxis der Bürstentechnik werden deshalb für Borsten und Borstenträger absolut gleiche Thermoplaste gefordert (Nachrichtenblatt für die Bürsten- und Pinselindustrie 1983, S. 307). Auch in der allgemeinen Kunststofftechnologie hat die Forschung gezeigt (Prof. Dr. Ing. H. Potente «Fügen unterschiedlicher Plastomere» v. 26. 06. 1979 IKV-TH Aachen), daß die Mehrzahl von Plastomeren nicht oder mit nur sehr mangelhaftem Ergebnis verschweißbar sind (gekürzte Fassung in «Plastverarbeiter» 1980 Nr. 4, S. 203–207).

Der Erfindung liegt die Aufgabe zugrunde, das eingangs geschilderte Verfahren dahingehend zu verändern und zu verbessern, daß für jede beliebige Werkstoffpaarung von Borste und Borstenträger eine einwandfreie und dauerhafte Verbindung erhalten wird.

Diese Aufgabe wird erfindungsgemäß dadurch gelöst, daß die Borstenenden so erwärmt werden, daß eine Rückbildung der orientierten, gestreckten Moleküle in die nichtorientierte geknäuelte Molekülform erfolgt und sich dadurch eine Verdickung am Borstenende bildet, und daß die Borsten mit ihrem verdickten Ende in den aufgeschmolzenen Borstenträger eingedrückt werden, bis dessen Schmelze hinter dem verdickten Ende wieder zusammenfließt.

Die Erfindung geht von der Erkenntnis aus, daß bei extrudierten und vor allem bei zusätzlich verstreckten Borsten aufgrund von Streckvorgängen die Moleküle zu gestreckten Ketten ausgerichtet werden, die Moleküle also innerhalb der Borste in deren Längsrichtung orientiert sind. Gleiche Ef-

fekte treten auch bei gespritzen, extrudierten und ähnlich hergestellten Borstenträgern, insbesondere im Bereich der Oberfläche, also im werkzeugnahen Bereich auf. Dort werden sie vornehmlich durch Schubspannungen im grenzflächennahen Bereich erzeugt. Wird der Thermoplast mit dieser «eingefrorenen» Orientierung in den Schmelzzustand überführt, so nehmen die Moleküle ihre spannungsfreie geknäuelte Form wieder ein. Hinsichtlich der Borstenenden bedeutet dies, daß sich am Ende der einzelnen Borste eine Kugel bildet und innerhalb eines Borstenbündels die einzelnen Kugeln zu einer linsenkopfförmigen Verbreiterung unter gleichzeitiger Verkürzung der Borstenlänge zusammenfließen. In diesem Zustand werden die Borsten in die aufgeschmolzene Aufnahmeseite des Borstenträgers eingedrückt, bis die verdickten Enden unterhalb der Oberfläche liegen. Dabei wird die Schmelze des Borstenträgers soweit verdrängt, daß sich eine Art Krater bildet, der aber wiederum nach kurzer Zeit zusammenfließt, indem die Schmelze in den Raum hinter der Verdickung bis zum Umfang des Borstenbündels eindringt. Diese Fließfähigkeit der Schmelze beruht im wesentlichen auf den gleichen Rückbildungserscheinungen im molekularen Bereich.

Im erhärteten Zustand ist eine formschlüssige Verbindung der beiden Fügepartner gegeben, da die Borstenbündel innerhalb des Borstenträgers aufgrund des die verdickten Borstenenden hinterfüllenden Kunststoffs verankert sind. Auf diese Weise lassen sich auch Fügepartner mit ungleicher Werkstoffpaarung fest und dauerhaft miteinander verbinden, da es hierbei nicht mehr auf einen Stoffschluß ankommt. Auch bei gut verschweißbaren Fügepartnern, bei denen also ein Stoffschluß über die gesamte oder einen Teil der Eindringtiefe der Borstenbündel gegeben ist, wird diese stoffschlüssige Verbindung durch die erheblich größere Fügefläche gegenüber der Stumpfschweißung und zusätzlich durch Formschluß verbessert. Dies ist deshalb von besonderer Bedeutung, weil die Qualität solcher Schweißverbindungen, die meist im Heizelementverfahren hergestellt werden, bei vielen Thermoplasten, z.B. den für die Borsten bedeutsamen Polyamiden, durch äußere Einflüsse während des Schweißvorgangs bis zur Unbrauchbarkeit beeinträchtigt werden kann. So kann es leicht zum Oxydieren an den Schmelzflächen kommen, wodurch die Schweißverbindung nicht oder nur mangelhaft hergestellt werden kann. Dies gilt auch bei Verschmutzungen oder zu großer Feuchtigkeit. Die Schmelztemperatur muß sehr genau gesteuert werden, da sich die Viskosität der Schmelze bei geringen Temperaturunterschieden stark ändert. Schrumpferscheinungen nach dem Erkalten führen zu Spannungen in der Schweißverbindung, die ihre Dauerstandfestigkeit beeinträchtigt. Schließlich muß das Aufheizen und Abkühlen langsam erfolgen, so daß die Maschinentaktzeiten relativ schlecht sind. Durch das erfindungsgemäße Verfahren und die zusätzliche Herstellung des Formschlusses lassen sich die negativen Auswirkungen solcher Einflüsse eliminieren. Praktische Versuche haben gezeigt, daß sich nicht nur Borsten und Borstenträger mit beliebiger Werkstoffpaarung, sondern auch Werkstoffe unterschiedlicher Struktur (gegossen, gespritzt, geschäumt etc.) einwandfrei miteinander verbinden lassen. Es hat sich ferner gezeigt, daß gegenüber Bürsten nach dem Stand der Technik die Auszugsfestigkeit der erfindungsgemäß verankerten Borsten bis zum Mehrfachen erhöht wird. Auch entfallen die bei herkömmlichen Bürsten nach außen offenen Löcher, die oft, z.B. bei Zahnbürsten, ein hygienisches Problem darstellen. Gegenüber herkömmlich gebohrten Borstenträgern, die durch das Verbohren notwendigerweise eine Schwächung erfahren, ergibt sich beim erfindungsgemäßen Verfahren für den Borstenträger eine höhere Festigkeit, so daß die Wandstärke des Borstenträgers auf ein Minimum, das wenig größer als die Eindringtiefe der Borstenbündel ist, vermindert werden kann. Dies ist bei bestimmten Anwendungsfällen, z.B. bei Zahnbürsten von Bedeutung, da ausschließlich die Borstenlänge für die Gebrauchseigenschaften von Bedeutung ist, nicht aber die Wandstärke des Borstenträgers. Die Zahnbürste kann also bei gleicher Borstenlänge flacher ausgebildet oder aber mit längeren Borsten bei gleicher Gesamthöhe ausgestattet werden. Im Bedarfsfall, z.B. bei Riemen, Bändern od.dgl. kann die Flexibilität des Borstenträgers durch Reduzierung der Wandstärke gesteigert werden, ohne daß der Halt der Borsten im Träger beeinträchtigt wird.

Gemäß einem Ausführungsbeispiel der Erfindung wird das verdickte Ende der Borsten bis zur teilweisen oder vollständigen Erstarrung abgekühlt und anschließend in die aufgeschmolzene Aufnahmeseite des Borstenträgers eingedrückt. In dieser Weise wird man insbesondere dann verfahren, wenn der Werkstoff des Borstenträgers oder aber dieser aufgrund seiner Konstruktion eine nur relativ schwache Aufwärmung gestattet, so daß die Schmelze an der Aufnahmeseite sehr zäh bleibt.

Bei allen Werkstoffpaarungen kann aber auch das verdickte Ende der Borsten im noch weichen Zustand in die aufgeschmolzene Aufnahmeseite des Borstenkörpers eingedrückt werden, ohne daß sich dabei das verdickte Ende ungünstig in der Hinsicht verformt, daß ein Hinterfließen des verdickten Endes durch die Schmelze des Borstenträgers nicht mehr möglich wäre.

In weiterer Abwandlung kann vorgesehen sein, daß die Borsten an ihrem verdickten Ende während oder unmittelbar nach dem Erwärmen nachgeformt werden. Dies kann sich vor allem bei großen Borstenbündeln und Borstenpaketen oder auch dann empfehlen, wenn der Rückbildungseffekt aus gestreckten Molekülen zu geknäuelten Molekülketten weniger ausgeprägt ist oder die Borstenenden in nur geringer Tiefe der Erwärmung ausgesetzt werden.

Die in erfindungsgemäßer Weise hergestellte Verbindung hat gegenüber stumpfgeschweißten Verbindungen einen weiteren entscheidenden Vorteil:

Am Übergang zwischen dem linearen Bereich der Borste und der tellerförmig erweiterten Schweißstelle findet sich der festigkeitsmäßig schwächste Bereich der Borste, insbesondere biegt sie sich dort besonders leicht ab. Auch die Dauerbruchfestigkeit ist vermindert. Beim erfindungsgemäßen Verfahren ist diese Schwachstelle der Borste in dem Borstenträger verankert, vor allem sind die außen liegenden Borsten eines Bündels oberhalb dieser Schwachstelle durch das Material des Borstenträgers radial eingeklemmt, so daß die Schwachstelle selbst überhaupt nicht belastet wird.

Gemäß einer weiteren Ausführungsform des erfindungsgemäßen Verfahrens werden vor oder anläßlich des Erwärmens der Aufnahmeseite des Borstenträgers in diesen Ausnehmungen zum Einsetzen der gebündelten Borsten eingeformt. Die Tiefe dieser Ausnehmungen kann der notwendigen Eindringtiefe der Borstenbündel entsprechen, so daß durch den Schmelzvorgang nur die Plastifizierung der vorgeformten Ausnehmung und das Hinterfließen des verdickten Endes des Borstenbündels erfolgt. Es ist aber auch möglich, die Ausnehmungen mit geringerer Tiefe auszubilden und die Borstenbündel um die Resttiefe einzudrücken.

Mit Vorzug wird bei dieser Ausführungsform so verfahren, daß anläßlich des Einformens der Ausnehmungen die Schmelze nach oben unter Bildung von die Aufnahmeseite überragenden Wülsten verdrängt wird. Auf diese Weise wird also um jede Ausnehmung herum ein Wulst bzw. Steg gebildet, der die Aufnahmeseite des Borstenträgers überragt. Entweder wird dann unmittelbar nach diesem Schmelzvorgang das Borstenbündel eingeführt oder aber wird ein solchermaßen hergestellter ausgehärteter Borstenträger vor dem Einführen der Borstenbündel erwärmt, so daß das Material des Wulstes bzw. Stegs wiederum in den Raum hinter den verdickten Borstenenden eindringt. Hierbei spielt wiederum die zuvor beschriebene Reorganisation im molekularen Bereich eine wesentliche Rolle.

In den Fällen, in denen der vorgenannte Effekt nicht in ausreichendem Maß selbsttätig eintritt, z.B. bei dicken Borstenbündeln oder Borstenpaketen, kann vorgesehen sein, daß der Borstenträger an seiner Aufnahmeseite in unmittelbarer Umgebung der eingesetzten Borsten unter Verdrängung der Schmelze in den Raum hinter die verdickten Enden nachgeformt wird. Dieses Nachformen kann gegebenenfalls derart ausgeprägt erfolgen, daß an der Aufnahmeseite teilkugelförmige Erhöhungen um jedes Borstenbündel herum erzeugt werden, so daß die Führungslänge der Borsten im Borstenträger erhöht wird. Das Nachformen kann aber auch nur zum Egalisieren oder Glätten der Aufnahmeseite führen.

Schließlich kann vorgesehen sein, daß anläßlich des Einformens der Ausnehmungen deren Boden gewölbt wird und daß die Enden der gebündelten Borsten entsprechend der Wölbung geformt werden. Auch hierbei erfolgt das Einformen der Ausnehmungen vorzugsweise so, daß im Randbereich der Ausnehmung ein Wulst entsteht. Das entsprechend geformte Bündelende mit seiner Verdickung wird in die aufgeschmolzene Ausnehmung eingedrückt, wobei das Material aus dem Wulst hinter die Verdickung fließt.

Gemäß einem weiteren Merkmal der Erfindung kann der Borstenträger auf seiner der Aufnahmeseite gegenüberliegenden Rückseite zugleich mit der Aufnahmeseite aufgeschmolzen werden. Hiermit wird einem weiteren Effekt Rechnung getragen, der bei der Durchführung des erfindungsgemäßen Verfahrens auftreten kann. Aufgrund der Rückbildung der gestreckten Moleküle in ihre Knäuelform, kann sich im Einzelfall der Borstenträger wölben. Dieses Verwölben wird durch die Aufwärmung der Rückseite ausgeglichen.

Mit dem Aufschmelzen der Rückseite können gegebenenfalls weitere Ziele verfolgt werden; so können dort gleichfalls Borsten eingefügt werden, um beispielsweise eine doppelseitige Besteckung mit gegebenenfalls unterschiedlichen Borsten in unterschiedlicher Anordnung zu erhalten (Handbürste). Statt dessen kann dabei auch eine Prägung, z.B. in Form eines Schriftzugs vorgenommen werden.

Das Aufschmelzen der Borstenenden und/oder des Borstenträgers kann durch Kontakterwärmung, z.B. im Heizelement- oder Heizspiegelverfahren oder durch kontaktloses Erwärmen, z.B. Wärmestrahlung, Luft od.dgl. erfolgen. Auch bei der kontaktlosen Erwärmung bilden sich die linsenkopfförmigen Verdickungen aus.

Nachstehend ist die Erfindung anhand einiger in der Zeichnung dargestellter Ausführungsbeispiele beschrieben.

In der Zeichnung zeigen:

Figur 1 eine schematische Ansicht einer Vorrichtung zur Durchführung des Verfahrens in einer Arbeitsphase;

Figur 2 eine teilweise geschnittene Seitenansicht einer Bürste nach dem Fügevorgang;

Figur 3 eine schematische Ansicht einer abgewandelten Ausführungsform der Vorrichtung zur Durchführung des Verfahrens in einer der Fig. 1 entsprechenden Arbeitsphase;

Figur 4 die Vorrichtung gemäß Figur 1 in der Fügephase;

Figur 5 eine teilweise geschnittene Seitenansicht einer mit der Vorrichtung gemäß Figur 3 hergestellten Bürste;

Figur 6 eine Variante der Vorrichtung gemäß der Figur 3 in der Ausgangsphase;

Figur 7, 8 die Vorrichtung gemäß Figur 6 in zwei Zwischenphasen;

Figur 9 eine Detailansicht der fertigen Verbindung von Borstenbündel und Borstenträger in vergrößerter Darstellung;

Figur 10 ein Formwerkzeug zur Herstellung von Ausnehmungen im Borstenträger im Schnitt und

Figur 11 ein Fügewerkzeug in Arbeitslage im Schnitt.

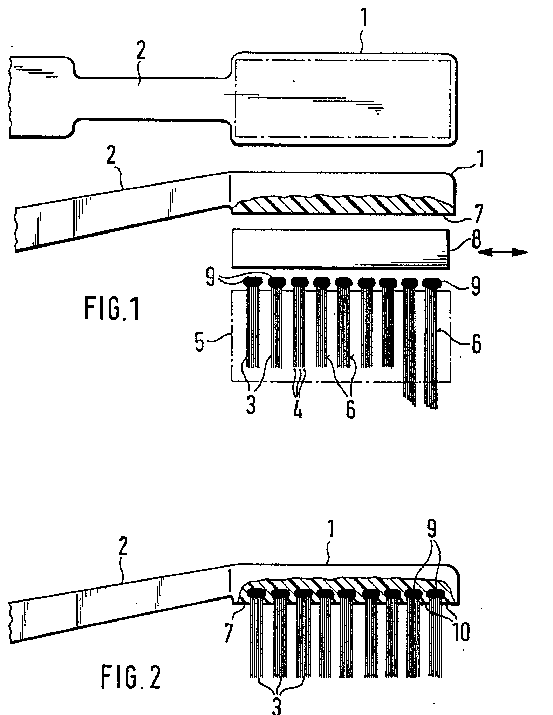

In Figur 1 ist schematisch eine Vorrichtung zur Herstellung einer Zahnbürste wiedergegeben. Figur 1 läßt den Stiel 2 mit dem im wesentlichen rechteckigen Borstenträger 1 in Draufsicht und Seitenansicht erkennen. Der Borstenträger 1 bzw. der Stiel 2 sind in einer nicht gezeigten Aufnahme gehaltert. Mit Abstand davon sind in einem Träger 5 mehrere Aufnahmen 6 für je ein aus einer Vielzahl von Borsten 4 bestehendes Bündel 3 angeordnet. Das Borstenbündel 3 kann bereits auf Wunschmaß zugeschnitten in den Träger 5 eingesetzt oder als Endlosstrang (Fig. 1 rechts) in den Träger 5 hineingeführt sein. Beim gezeigten Ausführungsbeispiel erfolgt die Erwärmung der Aufnahmeseite 7 des Borstenträgers 1 sowie der Enden der Borstenbündel 3 mittels eines plattenförmigen Heizelementes 8, das zwischen dem Borstenträger 1 und den freien Enden der Borstenbündel 3 angeordnet ist. Das Heizelement 8 ist in Richtung des rechts wiedergegebenen Doppelpfeils beweglich, kann also in den Raum zwischen Borstenträger und Borsten hineingebracht und nach dem Aufschmelzen der Enden der Borstenbündel 3 und der Aufnahmeseite 7 des Borstenträgers 1 wieder zurückgezogen werden, um Borstenträger und Borstenenden zusammenführen zu können. In Figur 1 ist die Schmelzzone an der Borsten-Aufnahmeseite 7 schraffiert angedeutet.

Bei Erwärmen der Borsten durch Heranfahren des Trägers 5 an das Heizelement 8 oder umgekehrt oder auch beim nicht gezeigten kontaktlosen Erwärmen werden lediglich die freien Enden der Borsten 4 aufgeschmolzen, wobei sie untereinander verschmelzen und einen abgerundeten, linsenförmigen Kopf 9 bilden. In dieser Form werden die Borstenbündel 3 und der Borstenträger 1 zusammengebracht und die verdickten Enden 9 unter Druck in die aufgeschmolzene Aufnahmeseite 7 des Borstenträgers eingedrückt, bis sie die in Figur 2 gezeigte Position einnehmen. Die Schmelze des Borstenträgers 1 an dessen Aufnahmeseite fließt hinter die verdickten Enden 9, so daß der zunächst beim Eindringen gebildete Krater bei 10 geschlossen wird. Bei Verwendung von endlosen Bürstensträngen wird der Strang nach dem Fügevorgang abgelängt.

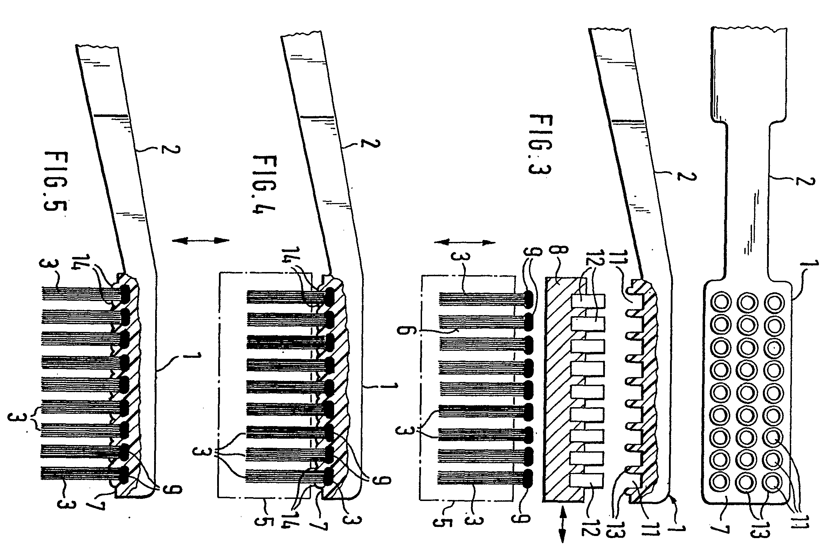

Bei einer abgewandelten Ausführungsform gemäß Figur 3 wird der Borstenträger 1 an der Aufnahmeseite 7 mit Ausnehmungen 11 versehen, deren Geometrie und Anordnung dem Borstenbesatz entspricht. Die Ausnehmungen 11 können vorgeformt oder auch, wie Figur 3 zeigt, mittels eines entsprechenden Heizelements 8, das einzelne Heizstifte 12 aufweist, hergestellt werden.

Beim Aufschmelzen der Aufnahmeseite des Borstenträgers 1 wird das aufgeschmolzene Material zu Ringstegen 13 nach außen verdrängt, die die Aufnahmeseite des Borstenträgers 1 überragen. Ebenso werden, wie bereits in bezug auf Figur 1 und 2 geschildert, die freien Enden der Borstenbündel 3 aufgeschmolzen, so daß sich wiederum linsenkopfförmige Verdickungen 9 bilden. Nach Wegfahren des Heizelementes 8 werden der Borstenträger 1 und die Borstenbündel 3 zusammengeführt (Fig. 4), wobei die Verdickungen 9 in die Ausnehmungen 11 eindringen und das geschmolzene Material der Ringstege 13 wiederum hinter den Verdickungen 9 zusammenfließt. In diesem Fall ist die Aufnahmeseite 7 des Borstenträgers 1 nicht mehr eben, sondern es sind jeweils im Bereich der Borstenbündel 3 Erhöhungen 14 gebildet (Fig. 4, 5).

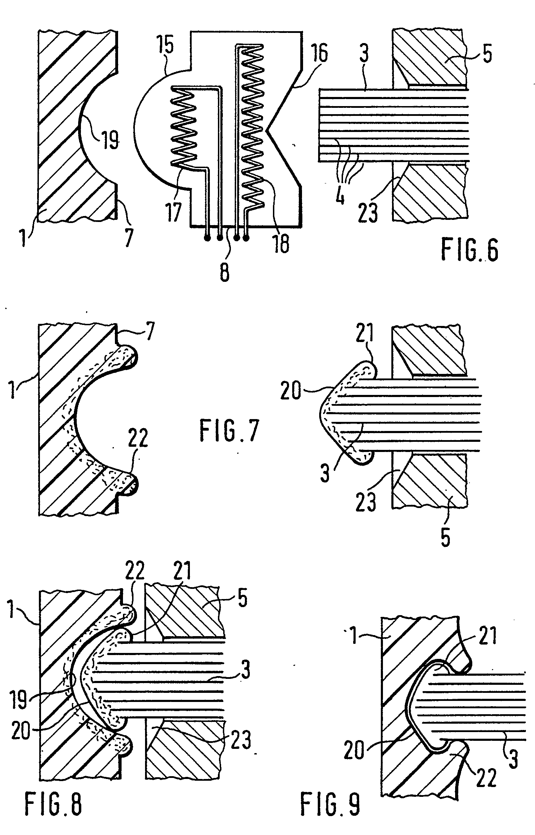

In den Figuren 7 bis 9 ist eine den Figuren 3 bis 5 ähnliche Ausführung des Verfahrens anhand eines einzelnen Borstenbündels wiedergegeben. Es ist wiederum der Borstenträger 1 und ein Träger 5 zur Aufnahme von Borstenbündeln 3 oder endlosen Borstensträngen gezeigt, zwischen denen in der Arbeitsphase ein Heizelement 8 angeordnet ist. Das Heizelement 8 weist an seiner einen Seite eine Formfläche 15 in Form einer Teilkugel, an seiner anderen Seite eine Formfläche 16 in Form eines flachen Kegels auf. Das Heizelement 8 ist ferner mit zwei gesonderten Heizeinrichtungen 17 für die eine Seite und 18 für die andere Seite ausgestattet, die den Bereich der Teilkugel-Formfläche 15 bzw. der Kegel-Formfläche 16 auf verschiedene Temperaturen halten, die an den Schmelzpunkt der jeweiligen Werkstoffe der Fügepartner angepaßt sind. Eine solche Temperaturtrennung am Heizelement kann selbstverständlich auch bei den Ausführungsformen gemäß Figuren 1 bis 6 vorgesehen sein. Bei dieser Ausführungsform ist ferner der Träger 5 als Formwerkzeug ausgebildet. Er weist nämlich im Bereich des Borstenaustritts eine flachkegelige Vertiefung 23 auf.

Mittels der Kugel-Formfläche 15 wird im Borstenträger 1 eine entsprechend kalottenförmige Ausnehmung 19 erzeugt, während beim Zusammenführen des Heizelementes 8 und des Trägers 5 das Ende des Borstenbündels 3 in die in Figur 8 erkennbare Form gebracht wird, die sich als kegelförmige Verdickung 20 mit randseitigem Wulst 21 zeigt.

Die Ausnehmung 19 im Borstenträger 1 kann, wie zuvor geschildert, anläßlich des Schmelzvorgangs oder aber auch bereits anläßlich der Herstellung des Borstenträgers 1 vorgefertigt sein. Beim Schmelzvorgang wird das Material der Ausnehmung 19 in jedem Fall zu einem wulstartigen Ring 22, der die Aufnahmeseite 7 des Borstenträgers 1 überragt, verdrängt (Figur 8).

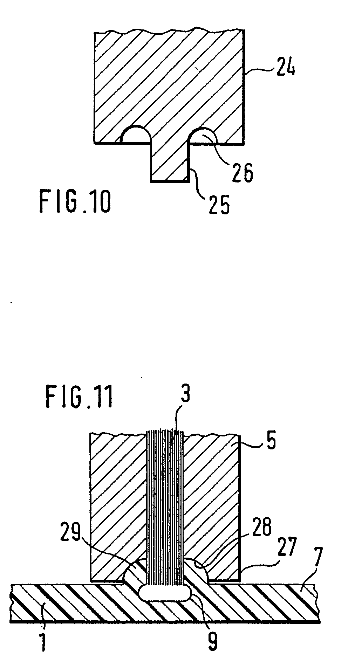

Nach dem Entfernen des Heizelementes 8 wird der Träger 5 mit den Borstenbündeln 3 an den Borstenträger 1 herangefahren, so daß die kegelförmige Verdickung 20 in die Ausnehmung 19 eindringt, bis sich der Wulst 22 am Borstenträger 1 hinter dem Wulst 21 am Borstenbündel 3 wieder schließt. Es bildet sich dann etwa der in Figur 10 wiedergegebene Formschluß zwischen Borstenträger 1 und Borstenbündel 3, der auch bei unverschweißbaren Werkstoffpaarungen ohne Stoffschluß zu einer festen Verbindung führt. Sie kann im Bedarfsfall noch durch Beidrücken des Wulstes 22 mittels der Formfläche 23 am Träger 5 verbessert werden.

In Figur 10 ist ein Formwerkzeug 24 zur Herstellung von Ausnehmungen im Borstenträger gezeigt. Dieses Formwerkzeug weist einen mittigen Zapfen 25 zur Ausbildung der Ausnehmung sowie eine diesen Zapfen an seinem Fuß umgebende Rinne 26 auf. In der Rinne 26 wird der beim Einformen der Ausnehmung verdrängte Werkstoff zu einem Ringwulst geformt. Zum Einsetzen des an seinem Ende aufgeschmolzenen Borstenbündels 3 mit seiner Verdickung 9 in die aufgeschmolzene Aufnahmeseite 7 des Borstenträgers 1 kann das beispielsweise einen Teil des Trägers 5 bildende Formwerkzeug 27 dienen, das an der Austrittsseite des Borstenbündels wiederum mit einer ringförmigen Vertiefung 28 versehen ist. Der Träger 5 wird mit dem Borstenbündel 3 an den Borstenträger 1 herangefahren, so daß das Borstenbündel 3 durch die von dem Zapfen 25 des Formwerkzeugs 24 (Fig. 10) gebildete, aufgeschmolzene Ausnehmung eindringt. Bei weiterem Zufahren wird der von der Rinne 26 am Formwerkzeug 24 (Fig. 10) vorgeformte, schmelzflüssige Ringwulst 29 zu einer definierten Form ausgebildet. Es bildet sich dann an der Aufnahmeseite des Borstenträgers 1 eine Kontur, wie sie ähnlich bezüglich der Figuren 4 und 5 beschrieben worden ist. Dadurch kann vor allem die Führungslänge der Borsten innerhalb des Borstenträgers 1 bei minimaler Wandstärke desselben optimiert werden. Zusätzlich wird die Oberfläche an der Aufnahmeseite geglättet.

**Patentansprüche**

1. Verfahren zum Verbinden von Borsten, mit einem Borstenträger, die jeweils aus thermoplastischem Kunststoff bestehen, indem die Borsten an ihrem einen Ende und der Borstenträger an seiner Borstenaufnahmeseite aufgeschmolzen, anschließend Borsten und Borstenträger zusammengeführt und in dieser Lage gegebenenfalls bis zum Erstarren der Schmelze gehalten werden, dadurch gekennzeichnet, daß die Borstenenden so erwärmt werden, daß eine Rückbildung der orientierten, gestreckten Moleküle in die nicht orientierte geknäuelte Molekülform erfolgt und sich dadurch eine Verdickung am Borstenende bildet, und daß die Borsten mit ihrem verdickten Ende in den aufgeschmolzenen Borstenträger eingedrückt werden, bis dessen Schmelze hinter dem verdickten Ende wieder zusammenfließt.

2. Verfahren nach Anspruch 1, dadurch gekennzeichnet, daß das verdickte Ende der Borsten im noch weichen Zustand in die aufgeschmolzene Aufnahmeseite des Borstenträgers eingedrückt wird.

3. Verfahren nach Anspruch 1, dadurch gekennzeichnet, daß das verdickte Ende der Borsten bis zur teilweisen oder vollständigen Erstarrung abgekühlt und anschließend in die aufgeschmolzene Aufnahmeseite des Borstenträgers eingedrückt wird.

4. Verfahren nach einem der Ansprüche 1 bis 3, dadurch gekennzeichnet, daß die Borsten an ihrem verdickten Ende während oder unmittelbar nach dem Erwärmen nachgeformt werden.

5. Verfahren nach einem der Ansprüche 1 bis 4, dadurch gekennzeichnet, daß die Aufnahmeseite des Borstenträgers partiell nur im Umkreis derjenigen Stellen aufgeschmolzen wird, an denen später die Borsten sitzen.

6. Verfahren nach einem der Ansprüche 1 bis 5, dadurch gekennzeichnet, daß vor oder anläßlich des Erwärmens der Aufnahmeseite des Borstenträgers in diesen Ausnehmungen zum Einsetzen der Borsten eingeformt werden.

7. Verfahren nach einem der Ansprüche 1 bis 6, dadurch gekennzeichnet, daß anläßlich des Einformens der Ausnehmungen die Schmelze nach oben unter Bildung von die Aufnahmeseite überragenden Wulsten verdrängt wird.

8. Verfahren nach einem der Ansprüche 1 bis 7, dadurch gekennzeichnet, daß der Borstenträger an seiner Aufnahmeseite in unmittelbarer Umgebung der eingesetzten Borsten unter Verdrängen der Schmelze in den Raum hinter die verdickten Enden nachgeformt und/oder geglättet wird.

9. Verfahren nach einem der Ansprüche 1 bis 8, dadurch gekennzeichnet, daß anläßlich des Einformens der Ausnehmungen deren Boden gewölbt wird und daß die Enden der gebündelten Borsten entsprechend der Wölbung geformt werden.

10. Verfahren nach einem der Ansprüche 1 bis 9, dadurch gekennzeichnet, daß der Borstenträger auf seiner der Borsten-Aufnahmeseite gegenüberliegenden Rückseite zugleich mit der Aufnahmeseite aufgeschmolzen wird.

11. Verfahren nach einem der Ansprüche 1 bis 10, zur Herstellung von Bürsten mit einem Borstenbesatz an gegenüberliegenden Seiten, dadurch gekennzeichnet, daß an der Borsten-Aufnahmeseite und auf der Rückseite gleichzeitig Borsten eingefügt werden.

12. Verfahren nach Anspruch 10, dadurch gekennzeichnet, daß der Borstenträger auf seiner Rückseite anläßlich des Aufschmelzens mit einer Prägung, z.B. einer Beschriftung versehen wird.

13. Verfahren nach einem der Ansprüche 1 bis 12, dadurch gekennzeichnet, daß das Aufschmelzen der Borstenenden und/oder des Borstenträgers durch Kontakt- oder kontaktlose Erwärmung vorgenommen wird.

**Claims**

1. Method for joining bristles to a bristle carrier, in each case made from a thermoplastic material, in that the bristles are melted at one end and the bristle carrier at its bristle reception side, subsequently the bristles and bristle carrier are brought together and are held in this position optionally until the melt has set, characterized in that the bristle ends are heated in such a way that there is a re-formation of the oriented, stretched molecules in the non-oriented, coiled molecule form and as a result a thickening forms at the bristle end and that the bristles are pressed with their thickened end into the melted bristle carrier until the melt thereof coalesces again behind the thickened end.

2. Method according to claim 1, characterized in that the thickened end of the bristles in the still soft state is pressed into the melted reception side of the bristle carrier.

3. Method according to claim 1, characterized in that the thickened end of the bristles is cooled up to complete or partial setting and subsequently is pressed into the melted reception side of the bristle carrier.

4. Method according to one of the claims 1 to 3, characterized in that the bristles are post-shaped at their thickened end during or immediately after heating.

5. Method according to one of the claims 1 to 4, characterized in that the reception side of the bristle carrier is partly melted only in the perimeter of those points at which the bristles will be subsequently located.

6. Method according to one of the claims 1 to 5, characterized in that before or in connection with the heating of the reception side of the bristle carrier recesses are made therein for the insertion of the bristles.

7. Method according to one of the claims 1 to 6, characterized in that in connection with the formation of the recesses, the melt is displaced upwards accompanied by the formation of beads projecting over the reception side.

8. Method according to one of the claims 1 to 7, characterized in that at its reception side in the immediate vicinity of the inserted bristles and accompanied by the displacement of the melt into the space behind the thickened ends, the bristle carrier is post-shaped and/or smoothed.

9. Method according to one of the claims 1 to 8, characterized in that in connection with the formation of the recesses, whose bottom is curved, the ends of the bundled bristles are shaped in accordance with the curvature.

10. Method according to one of the claims 1 to 9, characterized in that the bristle carrier on its back surface facing the bristle reception side is melted at the same time as the reception side.

11. Method according to one of the claims 1 to 10 for the production of brushes with bristles on opposite sides, characterized in that bristles are simultaneously inserted on the bristle reception side and on the back.

12. Method according to claim 10, characterized in that the bristle carrier is provided on its back with an impression, e.g. an inscription during melting.

13. Method according to one of the claims 1 to 12, characterized in that the melting of the bristle ends and/or the bristle carrier takes place by contact or contactless heating.

**Revendications**

1. Procédé pour l'assemblage de fibres avec un support de fibres, respectivement constitués de matière thermoplastique, suivant lequel les fibres sont fondues à une de leurs extrémités et le support de fibres est fondu du côté récepteur de fibres, ensuite les fibres et le support de fibres sont réunis et, le cas échéant, maintenus en cette position jusqu'à la solidification de la matière fondue, caractérisé en ce que: les extrémités de fibres sont chauffées de manière telle qu'il se produit une reconstitution des molécules orientées et allongées sous forme de molécules non orientées et agglomérées et qu'apparaît ainsi un épaississement à l'extrémité des fibres, et que l'extrémité épaissie des fibres est enfoncée dans le support de fibres fondu, jusqu'à ce que la matière fondue se referme derrière l'extrémité épaissie.

2. Procédé suivant la revendication 1, caractérisé en ce que l'extrémité épaissie des fibres est enfoncée dans le côté récepteur fondu du support de fibres alors qu'elle est encore molle.

3. Procédé suivant la revendication 1, caractérisé en ce que l'extrémité épaissie des fibres est refroidie jusqu'à solidification partielle ou complète et, ensuite, enfoncée dans le côté récepteur fondu du support de fibres.

4. Procédé suivant l'une des revendications 1 à 3, caractérisé en ce que l'extrémité épaissie des fibres est postformée pendant ou tout de suite après le réchauffement.

5. Procédé suivant l'une des revendications 1 à 4, caractérisé en ce que le côté récepteur du support de fibres n'est que partiellement fondu, uniquement aux endroits où les fibres seront placées ultérieurement.

6. Procédé suivant l'une des revendications 1 à 5, caractérisé en ce qu'avant ou au moment du réchauffement du côté récepteur du support de fibres, des évidements sont aménagés dans celui-ci afin d'y introduire les fibres.

7. Procédé suivant l'une des revendications 1 à 6, caractérisé en ce qu'au moment du formage des évidements, la matière fondue est repoussée vers le haut en formant des bourrelets débordant de la face réceptrice.

8. Procédé suivant l'une des revendications 1 à 7, caractérisé en ce que le support de fibres est postformé et/ou lissé du côté récepteur dans l'environnement immédiat des fibres introduites par déplacement de la matière fondue vers l'espace derrière les extrémités épaissies.

9. Procédé suivant l'une des revendications 1 à 8, caractérisé en ce qu'au moment du formage des évidements, le fond de ces derniers est bombé et que les extrémités des fibres réunies en faisceau sont formées suivant la courbure.

10. Procédé suivant l'une des revendications 1 à 9, caractérisé en ce que le dos du support de fibres est fondu en même temps que le côté récepteur des fibres.

11. Procédé suivant l'une des revendications 1 à 10, pour la fabrication de brosses ayant une garniture de fibres des deux côtés, caractérisé en ce que des fibres sont insérées simultanément du côté récepteur des fibres et au dos du support de fibres.

12. Procédé suivant la revendication 10, caractérisé en ce qu'au moment de la fusion, le dos du support de fibres est estampé, par exemple d'une inscription.

13. Procédé suivant l'une des revendications 1 à 12, caractérisé en ce que la fusion des extrémités de fibres et/ou du support de fibres se fait par chauffage par contact ou sans contact.

FIG.1

FIG.2

FIG.3

FIG.4

FIG.5

FIG.6

FIG.7

FIG.8

FIG.9

FIG.10

FIG.11